Europäisches Patentamt

European Patent Office

Office européen des brevets

(11) Numéro de publication: **0 199 639**
**B1**

(12) **FASCICULE DE BREVET EUROPEEN**

(45) Date de publication du fascicule du brevet:
27.12.89

(51) Int. Cl.⁴: **H02K 49/04**

(21) Numéro de dépôt: 86400796.8

(22) Date de dépôt: 14.04.86

(54) **Perfectionnements aux rotors induits des ralentisseurs électromagnétiques.**

(30) Priorité: 15.04.85 FR 8505609

(43) Date de publication de la demande:
29.10.86 Bulletin 86/44

(45) Mention de la délivrance du brevet:
27.12.89 Bulletin 89/52

(84) Etats contractants désignés:
AT BE CH DE GB IT LI NL SE

(56) Documents cités:
DE-A- 3 239 440
FR-A- 1 011 331
FR-A- 1 098 064
FR-A- 1 180 373
FR-A- 1 394 057

(73) Titulaire: LABAVIA S.G.E., 5, avenue Newton Parc
d'Activités, F-78390 Bois d'Arcy(FR)

(72) Inventeur: Marandet, André, 21, bis rue du Lieutenant
Jean Vignieux, F-95210 Saint-Gratien(FR)

(74) Mandataire: Behaghel, Pierre et al, CABINET
PLASSERAUD 84 rue d'Amsterdam, F-75009 Paris(FR)

## Description

L'invention est relative aux rotors induits des ralentisseurs électromagnétiques, notamment pour véhicules, rotors comprenant au moins un disque en matière ferromagnétique propre à défiler en regard d'une couronne statorique de pôles électromagnétiques alternativement positifs et négatifs dont il n'est séparé que par un entrefer, ce disque étant alors freiné et échauffé du fait de la création de courants de Foucault dans sa masse.

Elle vise plus particulièrement, parmi ces rotors, ceux dont le disque est relié à une bague de fixation par une couronne de bras, de préférence coudés et incurvés, formant ailettes de ventilation, les portions de plus grand diamètre de ces bras faisant saillie sur la face du disque opposée à l'entrefer et les crêtes de ces portions étant réunies entre elles par une joue annulaire, dont la face extérieure est exposée à l'air libre dans le ralentisseur terminé, l'ensemble du disque, de la bague, des bras et de la joue étant constitué par un seul bloc moulé, généralement en acier. (Voir par exemple les brevets FR 1 180 373 et DE 3 239 440.)

L'évacuation des calories engendrées dans le disque d'un tel rotor par les courants de Foucault, lors de la mise en service du ralentisseur équipé de ce rotor, se fait essentiellement par conduction vers la joue à travers les bras et par rayonnement à partir du disque, des bras et de la joue, ce dernier phénomène étant fortement renforcé par ventilation: en effet le profil d'ailettes adopté pour les bras fait jouer au rotor un rôle de ventilateur en balayant par un courant d'air de refroidissement les surfaces chaudes à refroidir du disque, des bras et de la joue.

Avec les modes de réalisation connus des rotors considérés, ladite évacuation des calories engendrées dans le disque laisse à désirer.

C'est ainsi que le disque en question peut être porté au rouge, sa température atteignant ou même dépassant une valeur de l'ordre de 700° C, alors que la joue demeure à une température inférieure à 500° C.

Or, il importe de refroidir efficacement le disque.

En effet, le couple de ralentissement susceptible d'être engendré par le ralentisseur équipé de ce disque est réduit dans une proportion considérable lorsque ce disque s'échauffe.

C'est ainsi que ce couple peut décroître d'une valeur C à une valeur C/3, pour des valeurs données de la vitesse de rotation et de la puissance électrique consommée, lorsque le disque s'échauffe de la température ambiante à une température de l'ordre de 700° C.

L'invention a pour but, surtout, d'améliorer le refroidissement du disque au cours du fonctionnement du ralentisseur et donc d'augmenter la valeur du couple à chaud engendré par cet appareil.

A cet effet les rotors du genre en question selon l'invention sont essentiellement caractérisés en ce que certaines au moins des portions de bras qui relient la joue au disque sont dédoublées en deux cloisons parallèles délimitant une poche étroite et allongée dont le fond est constitué par le disque et qui débouche axialement sur la face libre de la joue selon une fente évidée dans cette joue.

Dans des modes de réalisation avatageux, on a recours en outre à l'une et/ou à l'autre des dispositions suivantes :
- le profil de la paroi d'extrémité de la poche la plus proche de l'axe du rotor est évasé et arrondi de façon à faciliter l'accès de l'air de ventilation jusqu'au fond de cette poche, même dans sa zone la plus proche de l'axe,
- la poche débouche en outre radialement vers l'intérieur du rotor à son extrémité la plus proche de l'axe de ce rotor,
- la poche débouche en outre radialement vers l'extérieur du rotor à son extrémité la plus éloignée de l'axe de ce rotor,
- le fond de la poche, constitué par le disque, est percé d'au moins un orifice faisant communiquer cette poche avec l'entrefer,
- certaines des cloisons parallèles délimitant les poches sont épaissies au niveau de leurs bases contiguës au disque, de façon à augmenter l'extraction des calories provenant dudit disque par conduction,
- l'épaisseur moyenne de chacune des deux cloisons parallèles délimitant une poche est du même ordre de grandeur que l'épaisseur des bras simples adoptés antérieurement pour les rotors de dimensions comparables,
- dans un rotor selon l'alinéa précédent, dont le diamètre extérieur est compris entre 500 et 550 mm, l'épaisseur moyenne de chacune des deux cloisons parallèles délimitant les poches est de l'ordre de 6 mm.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant aux dessins ci-annexés d'une manière bien entendu non limitative.

Les figures 1 et 2, de ces dessins, montrent un rotor de ralentisseur électromagnétique établi conformément à l'invention respectivement en demi-vue en bout selon la flèche I de la figure 2 et en demi-coupe axiale selon II-II figure 1, le stator correspondant étant en outre représenté partiellement en spectre sur la figure 2.

Les figures 3 et 4 sont des coupes partielles de la figure 1 selon respectivement III-III et IV-IV.

Le mot "rotor" utilisé dans le présent texte désigne plus précisément chacun des sous-ensembles monoblocs 1 qui sont compris par l'ensemble rotorique d'axe X d'un ralentisseur électromagnétique ou à "courants de Foucault" et qui comportent un disque induit 2 en matériau ferromagnétique.

Comme on le sait, un tel disque 2 est solidarisé avec l'arbre 3 à ralentir, tel que l'arbre de transmission d'un véhicule, et il est monté de façon à pouvoir défiler devant le stator 4 du ralentisseur,. ou plus précisément devant une couronne de pôles inducteurs 5 alternativement positifs et négatifs faisant partie de ce stator, avec interposition d'un entrefer E, le disque 2 en question étant alors le siège de courants de Foucault qui se traduisent par un freinage et un échauffement de ce disque.

L'ensemble rotorique du ralentisseur comprend, en plus du rotor ou sous-ensemble défini ci-dessus, lequel est unique ou de préférence dédoublé symétriquement de part et d'autre du stator, une pièce intermédiaire 6 de révolution autour de l'axe X, telle qu'un manchon, moyeu ou plateau, elle-même fixée, généralement par boulonnage, sur l'arbre 3 à ralentir, chaque "rotor" 1 ici considéré étant de son côté fixé par boulonnage sur cette pièce intermédiaire.

D'une façon encore connue en soi, chaque rotor monobloc 1 comprend, en plus du disque 2, et venues de moulage avec lui :
- une bague de fixation 7 de diamètre moyen inférieur au diamètre intérieur du disque 2, percée d'alésages axiaux 8, filetés ou non, destinés à recevoir des boulons (non représentés) de fixation de cette bague sur la pièce intermédiaire 6,
- une couronne d'ailettes de ventilation 9 faisant saillie sur la face, du disque 2, opposée à sa face destinée à délimiter l'entrefer E, certaines au moins de ces ailettes (notamment une sur deux ou une sur trois) étant prolongées vers l'axe X de façon à former des bras $9_1$ reliant le disque à la bague 7,
- et une jante ou joue annulaire 10 s'étendant en général parallèlement au disque et reliant les crêtes des portions de plus grand diamètre des ailettes 9 de façon à former entre ces ailettes, le disque et la joue des canaux de guidage 11 pour l'air de ventilation.

Les ailettes 9 et les bras $9_1$ qui les prolongent éventuellement sont de préférence incurvés vers l'arrière par rapport au sens de rotation du rotor, si l'on considère les rayons croissants.

En outre, les bras $9_1$ sont de préférence axialement coudés, comme dans le mode de réalisation illustré, de façon à "rentrer" axialement la bague 7 vers l'intérieur du stator et à réduire ainsi l'encombrement axial de la portion centrale du rotor.

Mais lesdits bras 9 pourraient également être "droits", leurs lignes moyennes demeurant alors sensiblement contenues dans un même plan transversal.

Le nombre des bras $9_1$ de chaque rotor est avantageusement égal à huit et le nombre total de ses ailettes 9, à seize.

C'est l'évacuation des calories engendrées dans le disque 2 par la création des courants de Foucault lors des mises en service du ralentisseur que la présente invention se propose d'améliorer.

A cet effet, l'on constitue certaines au moins des ailettes 9 par des paires de cloisons parallèles 12 délimitant entre elles une poche étroite et allongée 13 dont le fond est délimité par le disque 2 et qui débouche axialement sur la face libre de la joue 10 à travers une fente 14 évidée dans cette joue.

L'expérience montre que, d'une façon inattendue, une telle construction à ailettes creuses ou dédoublées débouchant dans la joue assure un refroidissement beaucoup plus efficace que les constructions connues du même genre comprenant des ailettes simples pleines.

Ceci est dû à la création automatique d'un balayage intense des surfaces intérieures des poches par des courants d'air de ventilation, lors des rotations du rotor.

L'intensité de ce balayage est surprenante du fait que la face libre, généralement plane ou tronconique, de la joue 10 est lisse et ne présente donc pas de saillies propres à "accrocher" l'air lors desdites rotations.

Cette amélioration du refroidissement se traduit par une augmentation du couple de ralentissement, toutes choses égales par ailleurs, et ce sans pour autant entraîner de pertes notables par ventilation, c'est-à-dire sans conduire à un accroissement sensible du couple nécessaire à l'entraînement du ralentisseur à froid.

C'est ainsi que, dans une réalisation effective, le perfectionnement ci-dessus défini a permis d'améliorer de plus de 20% le couple de décélération d'un ralentisseur "à chaud", subsistant au bout de 20 minutes de fonctionnement permanent, alors que le faible couple nécessaire à l'entraînement de ce ralentisseur à froid n'est lui-même accru que d'un tiers à peine : à titre de comparaison, les modifications structurelles du rotor qui sont habituellement proposées pour améliorer le refroidissement de ce rotor au point d'accroître le couple à chaud d'environ 20 % se traduisent par le doublement ou le triplement du couple d'entraînement à froid.

Les poches étroites et allongées 13 peuvent être fermées à leurs deux extrémités radiales.

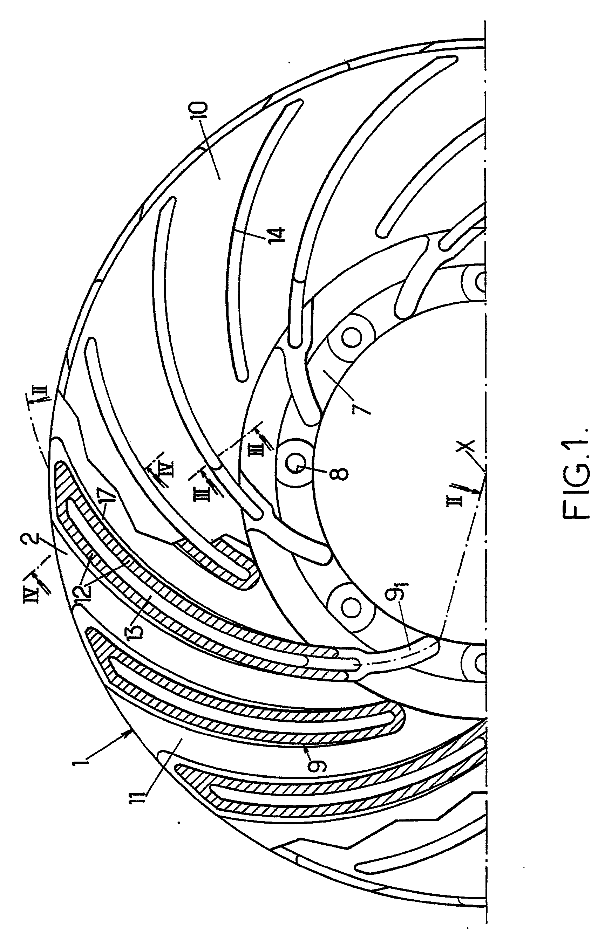

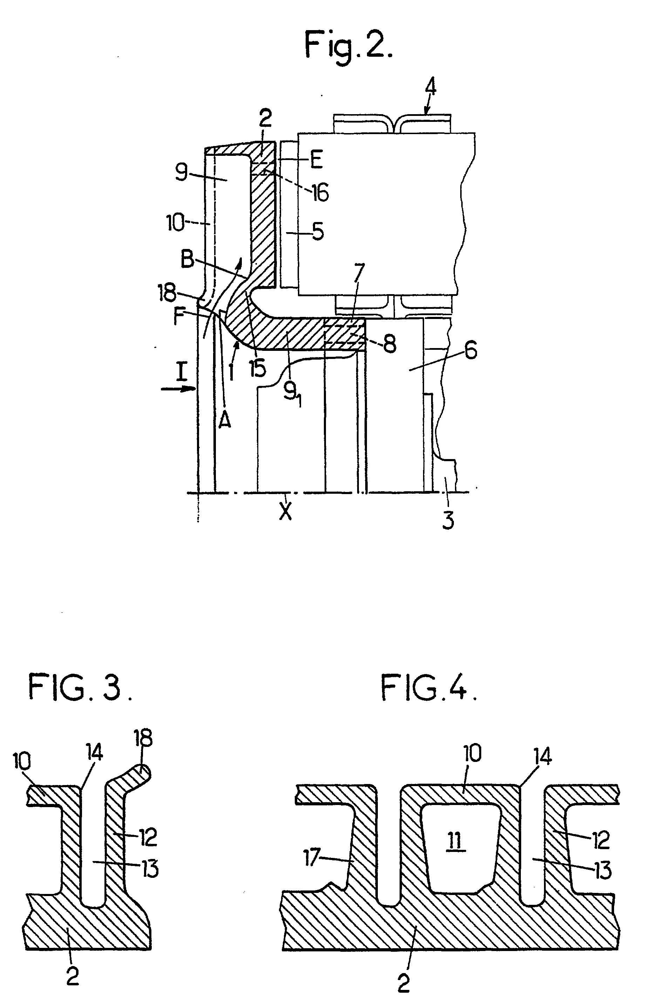

C'est ce qui a été supposé sur les figures 1 et 2.

Dans ce cas, il est avantageux d'évaser en A (figure 2) le bord de la paroi 15 délimitant l'extrémité radiale interne de la poche et d'arrondir la base de la surface, de cette paroi 15, intérieure à la poche, au niveau de son raccordement B avec le fond de cette poche, c'est-à-dire avec le disque 2.

Cet évasement A et cet arrondi B permettent aux courants d'air de balayage d'accéder jusqu'au fond de la poche même dans sa zone amont, comme schématisé par la flèche F sur la figure 2, sans que soit créé aucun volume mort non balayé dans cette zone.

On peut également ouvrir totalement la poche à l'une et/ou à l'autre de ses deux extrémités radiales de façon à faire déboucher cette poche non seulement axialement sur la face libre de la joue 10, mais aussi radialement vers l'intérieur et/ou vers l'extérieur de la couronne rotorique.

Dans un tel cas, on peut arrêter les extrémités des deux cloisons 12 délimitant une même poche 13, du côté de l'une et/ou l'autre de ses ouvertures radiales, à un même niveau, c'est-à-dire en regard l'une de l'autre selon la direction perpendiculaire à leurs surfaces moyennes à l'extrémité considérée, ou au contraire on peut prolonger radialement l'une quelconque de ces deux cloisons 12 par rapport à l'autre.

Dans ce dernier cas, les bras $9_1$ peuvent être constitués par des prolongements internes de l'une seulement des deux cloisons 12 de la poche concernée.

Le fait d'ouvrir la poche vers l'intérieur du rotor présente les avantages d'une amélioration du balayage du fond de cette poche, d'une réduction du couple d'entraînement du ralentisseur à froid et d'un allègement du rotor.

Selon une autre variante, on évide au fond de la poche 13, à travers le disque induit 2 de lui-même, au moins un orifice 16 de section et profil appropriés faisant communiquer l'intérieur de la poche avec l'entrefer E.

De tels orifices 16 peuvent servir soit à prélever dans l'entrefer de l'air chaud à refroidir, soit à envoyer vers cet entrefer de l'air de refroidissement.

Pour ce qui est de l'épaisseur e des cloisons parallèles 12, on la prévoit relativement élevée de façon que la chaleur extraite par conduction du disque 2 soit elle-même suffisante pour justifier l'adoption du perfectionnement selon l'invention, perfectionnement dont le but est une extraction énergique par ventilation des calories emmagasinées dans les ailettes dédoublées.

C'est ainsi que cette épaisseur e de chaque cloison 12 peut être du même ordre de grandeur que l'épaisseur des ailettes uniques qui, dans les constructions antérieurement connues, remplissaient le rôle des cloisons dédoublées ici considérées.

Cette épaisseur est avantageusement de l'ordre de 5 à 8 mm pour un rotor à seize ailettes dont le diamètre extérieur est compris entre 500 à 550 mm.

Pour améliorer encore l'extraction par conduction des calories engendrées dans le disque 2, il peut être avantageux d'accroître l'épaisseur des cloisons 12 au niveau de leurs bases adjacentes à ce disque.

C'est ce qui a été représenté en 17 sur les figures 1 et 4, les sections droites des cloisons 12 présentant alors la forme générale d'un trapèze.

Dans le mode de réalisation illustré, la grande base, de ce trapèze, contiguë au disque 2, est d'autant plus large que l'on s'éloigne de l'axe X du rotor, ce qui correspond à des quantités de chaleur croissantes à évacuer, la quantité de chaleur à extraire de chaque anneau d'épaisseur radiale donnée du disque 2 croissant avec le rayon moyen de cet anneau.

Pour faciliter l'introduction des courants d'air de ventilation à l'intérieur des canaux 11, on évase légèrement en 18 (figures 2 et 3) le bord intérieur de la joue 10.

En suite de quoi et quel que soit le mode de réalisation adopté, on dispose finalement d'un rotor induit de ralentisseur électromagnétique dont la constitution, le fonctionnement et les avantages (notamment l'amélioration du refroidissement et par conséquent l'accroissement du couple de décélération à chaud) résultent suffisamment de ce qui précède.

**Revendications**

1. Rotor induit de ralentisseur électromagnétique, comprenant au moins un disque induit (2) destiné à défiler en regard de l'inducteur statorique avec interposition d'un entrefer (E), disque relié à une bague de fixation (7) par une couronne de bras (9, 9₁) formant ailettes de ventilation, les portions de plus grand diamètre de ces bras faisant saillie axialement sur la face du disque, opposée à l'entrefer et leurs crêtes étant réunies entre elles par une joue annulaire (10) dont la face extérieure est exposée à l'air libre dans le ralentisseur terminé, l'ensemble du disque, de la bague, des bras et de la joue étant constitué par un seul bloc moulé, caractérisé en ce que certaines au moins des portions de bras (9) qui relient la joue (10) au disque (2) sont dédoublées en deux cloisons parallèles (12) délimitant une poche étroite et allongée (13) dont le fond est constitué par le disque et qui débouche axialement de la face libre de la joue à travers une fente (14) évidée dans cette joue.

2. Rotor selon la revendication 1, caractérisé en ce que le profil de la paroi d'extrémité (15), de la poche (13), la plus proche de l'axe du rotor est évasé et arrondi (en A, B) de façon à faciliter l'accès de l'air de ventilation jusqu'au fond de cette poche, même dans sa zone la plus proche de l'axe.

3. Rotor selon la revendication 1, caractérisé en ce que la poche (13) débouche en outre radialement vers l'intérieur du rotor à son extrémité la plus proche de l'axe de ce rotor.

4. Rotor selon la revendication 1, caractérisé en ce que la poche (13) débouche en outre radialement vers l'extérieur du rotor à son extrémité la plus éloignée de l'axe de ce rotor.

5. Rotor selon la revendication 1, caractérisé en ce que le fond de la poche (13), constitué par le disque (2), est percé d'au moins un orifice (16) faisant communiquer cette poche avec l'entrefer (E).

6. Rotor selon la revendication 1, caractérise en ce que certaines des cloisons parallèles délimitant les poches (13) sont épaissies (en 17) au niveau de leurs bases contiguës au disque (2), de façon à augmenter l'extraction des calories provenant dudit disque par conduction.

7. Rotor selon la revendication 1, caractérisé en ce que l'épaisseur moyenne de chacune des deux cloisons parallèles (12) délimitant une poche (13) est du même ordre de grandeur que l'épaisseur des bras simples adoptés antérieurement pour les rotors de dimensions comparables.

8. Rotor selon la revendication 7, dont le diamètre extérieur est compris entre 500 et 550 mm, caractérisé en ce que l'épaisseur moyenne de chacune des deux cloisons parallèles (12) délimitant les poches (13) est de l'ordre de 6 mm.

**Claims**

1. An electromagnetic retarder armature rotor comprising at least one disk (2) arranged to move opposite of the inductor stator from which it is separated by an air gap (E), said disk being connected to a fixing ring (7) by a crown of arms (9, 9₁) forming ventilation fins, the largest diameter portions of these arms projecting axially from the face, of the disk, which is the farthest from the air gap and their peaks being joined together by an annular flange (10), the external face of which is exposed to the free air in the completed retarder, the assembly formed by the disk, the ring, the arms and the flange being formed as a single molded block, characterized in that some at least of the arm portions (9) which connect the flange (10) to the disk (2) are split into two parallel walls (12) defining a narrow elongate pocket (13) whose bottom is formed by the disk and which emerges axially in the free face of the flange through a slit (14) formed in this flange.

2. Rotor according to claim 1, characterized in that the profile of the end wall (15), of the pocket (13), the nearest to the axis of the rotor is widened and rounded (at A, B) so as to facilitate the access of the ventilation air to the bottom of this pocket, even in its zone the closest to the axis.

3. Rotor according to claim 1, characterized in that the pocket (13) further emerges radially outwardly of the rotor at its end the closest to the axis of this rotor.

4. Rotor according to claim 1, characterized in that the pocket (13) further emerges radially outwardly of the rotor at its end of the farthest away from the axis of this rotor.

5. Rotor according to claim 1, characterized in that the bottom of the pocket (13) formed by the disk (2), is pierced with at least one orifice (16) causing this pocket to communicate with the air gap (E).

6. Rotor according to claim 1, characterized in that some of the parallel walls defining the pockets (13) are thickened (at 17) at the level of their bases contiguous with the disk (2), so as to increase the removal of the heat coming from said disk by conduction.

7. Rotor according to claim 1, characterized in that the mean thickness of each of the two parallel walls (12) defining a pocket (13) is of the same order of size as the thickness of the single arms adopted in the prior art for rotors of comparable dimensions.

8. Rotor according to claim 7, whose outer diameter is between 500 and 550 mm, characterized in that the mean thickness of each of the two parallel dividing walls (12) defining the pockets (13) is of the order of 6 mm.

**Patentansprüche**

1. Induzierter Rotor für eine elektromagnetische Bremse, mit zumindest einer induzierten Scheibe (2), die dazu bestimmt ist, vor dem Induktor-Stator unter Zwischenschaltung eines Luftspaltes (E) vorbeizuwandern, wobei die Scheibe mit einem Befestigungsring (7) über einen Armkranz (9, 9₁) verbunden ist, der Ventilationsflügel bildet, wobei die Abschnitte größeren Durchmessers dieser Arme in axialer Richtung von der dem Luftspalt gegenüberliegenden Scheibenfläche abstehen und ihre Scheitel untereinander durch einen Ringflansch (10) verbunden sind, dessen Außenseite am Bremsenende der freien Luft ausgesetzt ist, wobei die Anordnung aus Scheibe, Ring, Armen und Flansch aus einem einzigen Gußblock besteht, dadurch gekennzeichnet, daß zumindest bestimmte Abschnitte der Arme (9), welche den Flansch (10) mit der Scheibe (2) verbinden, als Doppelarme aus zwei parallelen Wänden (12) gebildet sind, die eine schmale und langgestreckte Tasche (13) begrenzen, deren Boden durch die Scheibe gebildet ist und die in axialer Richtung auf der freien Oberfläche des Flansches über einen im Flansch ausgesparten Schlitz (14) ausmündet.

2. Rotor nach Anspruch 1, dadurch gekennzeichnet, daß das Profil der der Achse des Rotors am nächsten liegenden Endwand (15) der Tasche (13) erweitert und abgerundet ist (bei A, B), um den Zutritt der Ventilationsluft bis zum Boden der Tasche zu erleichtern, selbst in ihrer der Achse am nächsten liegenden Zone.

3. Rotor nach Anspruch 1, dadurch gekennzeichnet, daß die Tasche (13) außerdem in radialer Richtung an ihrem der Rotorachse benachbarten Ende gegen das Innere des Rotors ausmündet.

4. Rotor nach Anspruch 1, dadurch gekennzeichnet, daß die Tasche (13) außerdem in radialer Richtung an ihrem von der Rotorachse am weitesten entfernt liegenden Ende gegen die Außenseite des Rotors ausmündet.

5. Rotor nach Anspruch 1, dadurch gekennzeichnet, daß der von der Scheibe (2) gebildete Boden der Tasche (13) von zumindest einer Öffnung (16) durchsetzt ist, welche diese Tasche mit dem Luftspalt (E) in Verbindung setzt.

6. Rotor nach Anspruch 1, dadurch gekennzeichnet, daß bestimmte der die Taschen (13) begrenzenden parallelen Wände auf der Höhe ihrer an die Scheibe (2) angrenzenden Basen (bei 17) verdickt sind, um so die Wärmeabfuhr von der Scheibe durch Wärmeleitung zu erhöhen.

7. Rotor nach Anspruch 1, dadurch gekennzeichnet, daß die mittlere Dicke jeder der parallelen Wände (12), welche eine Tasche (13) begrenzen, von der gleichen Größenordnung wie die Dicke der einfachen Arme ist, die bisher für Rotoren vergleichbarer Dimensionen verwendet wurden.

8. Rotor nach Anspruch 7, dessen Außendurchmesser zwischen 500 und 550 mm beträgt, dadurch gekennzeichnet, daß die mittlere Dicke jeder der beiden parallelen Wände (12), welche die Taschen (13) begrenzen, in der Größenordnung von 6 mm liegt.

FIG.1.

EP 0 199 639 B1

# Fig.2.

# FIG. 3.

# FIG.4.